# EUROPEAN PATENT APPLICATION

(11) **EP 1 760 712 A2**
(43) Date of publication of application: **07.03.2007**
(21) Application number: 06076623.5
(22) Date of filing: 25.08.2006
(51) Int. Cl.: G11B 19/00, G11B 33/02, H04N 5/76

(54) **Portable media player**

(30) Priority: 02.09.2005 US 218681
(71) Applicant: Delphi Technologies, Inc., Troy, Michigan 48007 (US)
(72) Inventor: Hedges, Christopher A., Greentown, IN 46936 (US); Moody, Peter A., Carmel, IN 46032 (US)
(74) Representative: Denton, Michael John

(57) **Abstract**

An audio and/or video system is disclosed. The audio and/or video system includes an entertainment module (10) adapted for connection to a docking station (50). The entertainment module (10) includes output means (12, 25) for provding programming that is audible and/or visible. The entertainment module (10) includes an antenna (66) connected to a wireless module (62) that wirelessly accesses wireless audio and/or video programming, a storage means (64) for storing the wireless audio and/or video programming, and an input means (20) for receiving a compact disc or digital video disc (CD, DVD) that stores media audio and/or video programming. The docking station (50) may optionally include the antenna (66), wireless module (62) and storage means (64).

## Description

### TECHNICAL FIELD

The disclosure relates to audio and video devices. More particularly, the disclosure relates to an audio and video system including an entertainment module and a docking station.

### BACKGROUND OF THE INVENTION

The worldwide digital video disk (DVD) market is maturing and has become accepted as the standard for viewing audio and video on a television, computer monitor, or the like. In the domestic United States for example, DVD player units were first available in 1997, with 349,000 units being shipped and 200,000 units being sold. In 1997, approximately 900 DVD programming content titles were available. By the year 2004, 530,000,000 DVD player units were shipped in the United States with 37,000,000 units being sold; in the same year, the number of available DVD titles for purchase grew to 29,000. It is estimated that by the end of the year 2005, at least one DVD player will be in at least 80% of United States households, accounting for more than 70,000,000 homes.

In addition to home DVD players, portable DVD players including, for example, a 5-inch liquid crystal display (LCD) screen have become widely popular, allowing DVD enthusiasts to enjoy their DVD titles remotely from their home. DVD players are also being offered as an originally-installed feature in many vehicles, or, alternatively, as an after-market component that a user or skilled technician may install within the vehicle. Accordingly, the home, portable, or vehicular DVD player has become a ubiquitous device, allowing consumers to enjoy DVDs from their library in virtually any environment.

Although adequate for most applications, DVD players do not permit consumers to access programming content that may not be already part of their entertainment library. Even further, consumers are often required to purchase multiple DVD players to utilize their DVD library in different environments; for example, as described in the above scenarios, a consumer may purchase a first DVD player as a component for their home theater system. Then, a second DVD player may be purchased for utilization in a first portable situation such as, for example, while a user is taking a walk. Then, thirdly, a DVD player may be purchased for utilization in a second portable situation such as, for example, as an originally-installed component in a vehicle that may be part of a premium vehicle package.

Accordingly, a need therefore exists to provide a device that eliminates the need to obtain a plurality of DVD players in various platforms, thereby saving the consumer money by not having to purchase a plurality of DVD players or upgrading to premium vehicle packages to obtain a DVD player as an originally-installed component in a vehicle. Even further, a need exists to permit DVD enthusiasts to obtain programming content that is not included in their DVD library.

### SUMMARY OF THE INVENTION

An audio and/or video system, comprising:
a compact / digital-video disc player (10) adapted for connection to a docking station (50), wherein the compact / digital-video disc player (10) includes output means (12, 25) for providing programming that is audible and/or visible, wherein the compact / digital-video disc player (10) is not a general purpose computer.

### BRIEF DESCRIPTION OF THE DRAWINGS

The inventors of the present disclosure have recognized these and other problems associated with fixed and/or portable DVD devices. The present disclosure will now be described, by way of example, with reference to the accompanying drawings, in which:
Figure 1 is a perspective view of an entertainment module according to an embodiment;
Figure 2A is a perspective view of the entertainment module according to Figure 1 being inserted into a docking station according to an embodiment;
Figure 2B is a perspective view of the entertainment module that is pivotably attached to the docking station according to Figure 2A;
Figure 3 is a block diagram view of the entertainment module and docking station according to an embodiment;
Figure 4 is a block diagram of the entertainment module according to an embodiment; and
Figure 5 is a block diagram view of the entertainment module and docking station according to an embodiment.

### DESCRITION OF THE PREFERRED EMBODIMENTS

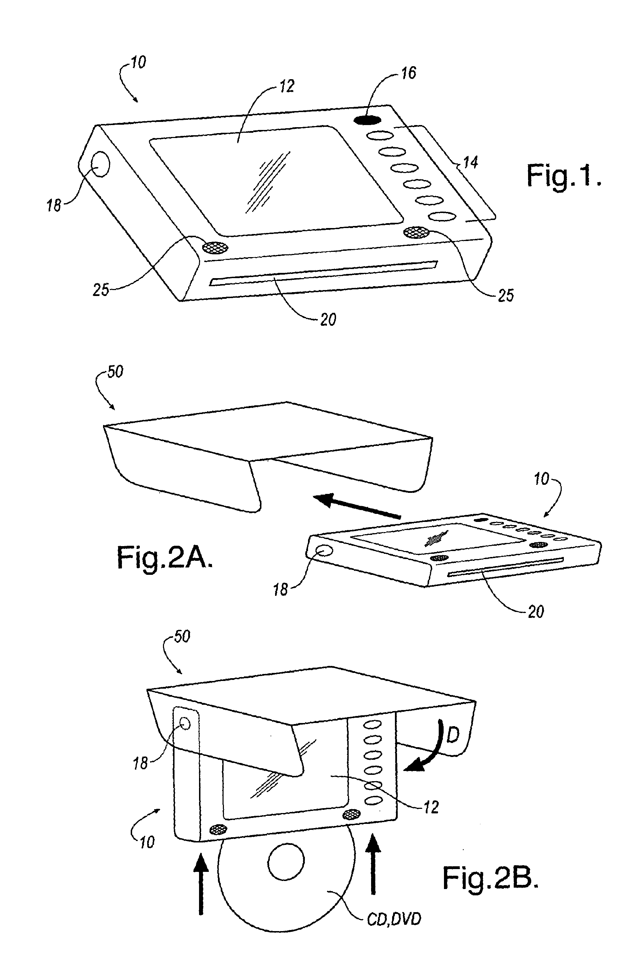

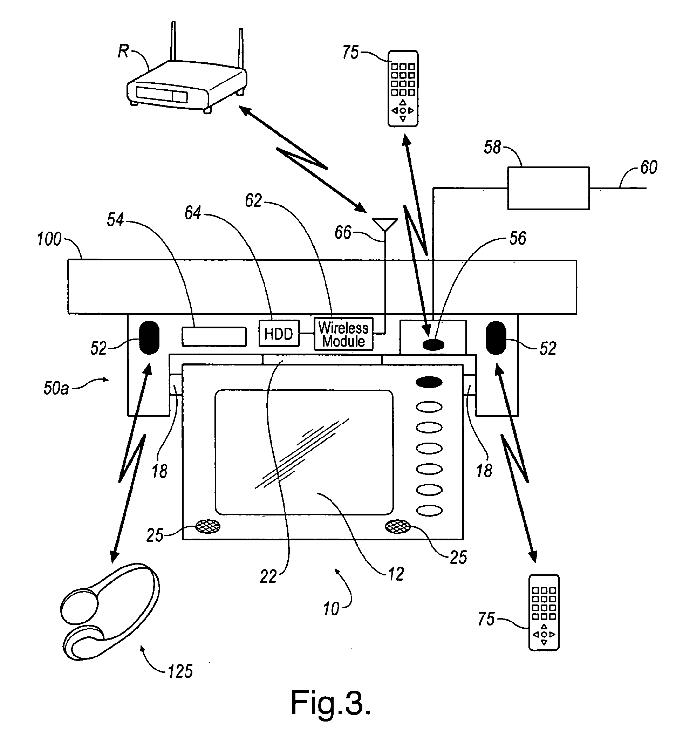

Referring to Figure 1, an entertainment module is generally shown at 10 according to an embodiment. The entertainment module 10 may include at least an output means, such as a display screen 12 and speakers 25, a plurality of control buttons 14, an infrared (IR) receiver 16 to enable communication with a remote control 75 (Figure 3), a pair of mounting pivot studs 18, and an input means, such as a slot 20 for inputting media programming, such as, for example, a compact disk, CD, or digital video disc, DVD (Figure 2B). Although the slot 20 is shown for inputting a CD or DVD, one or more input means 20 other than a CD/DVD slot may be included, such as, for example, input means for upload MP3 audio files to a storage means 64.

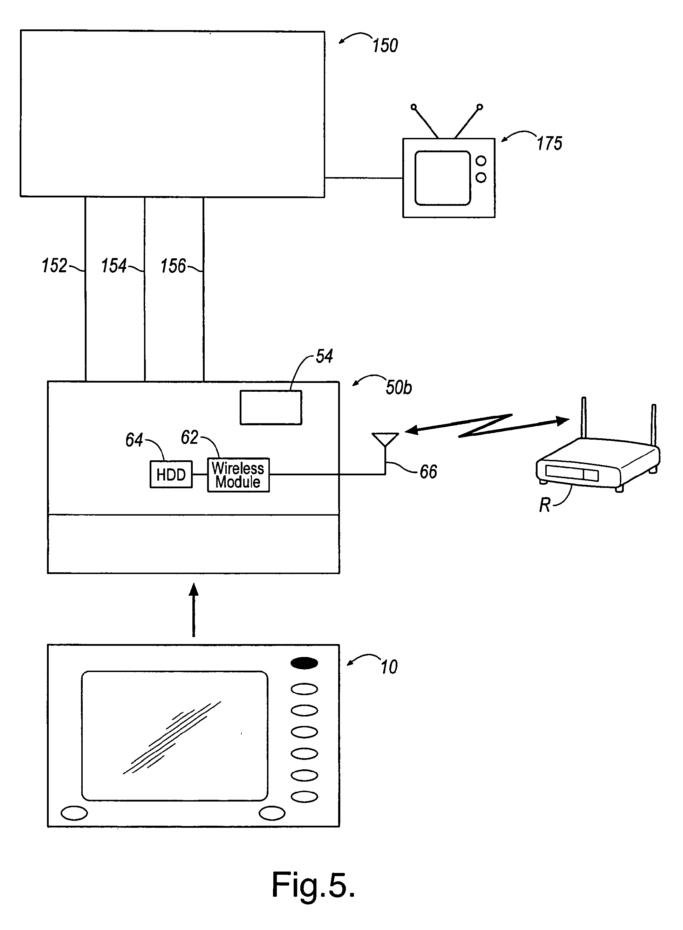

As shown in Figures 2A and 2B, the entertainment module 10 may be inserted into and secured/supported by a docking station 50. The docking station 50 may be located, for example, in a vehicle (Figure 3), or alternatively, in a home (Figure 5). If located in a vehicle, the docking station 50 may be affixed to, for example, a vehicle's headliner 100; alternatively, if located in a home, the docking station may be located, for example, under a kitchen cabinet, or, alternatively on a table-, counter-, or desk-top. Although the entertainment module 10 may be inserted into and secured by the docking station 50 for, if desired, pivotable deployment in the direction of arrow, D, it will be appreciated that the entertainment module 10 may be a stand-alone device that may be utilized on its own without being inserted into the docking station 50; accordingly, the entertainment module 10 may be utilized as an independent, portable device for playing media programming stored on a CD or DVD, or, alternatively, accessed wireless programming as described below.

Referring to Figure 3, a docking station, which is seen generally at 50a, is attached to the vehicle headliner 100. The entertainment module 10 is attached to the docking station 50a by a connector 22. The connector 22 may extend from either the entertainment module 10, or, alternatively, from the docking station 50a. Once the entertainment module 10 and docking station 50a are connected, the entertainment module 10 may draw power from the vehicle's battery through the connector 22 while also sending/receiving audio and/or video programming to and from the entertainment module 10 and docking station 50a through the connector 22.

As illustrated, the docking station 50a, includes, for example, IR transmitters 52 for transmitting wireless audio signals to headphones 125. The docking station 50a also includes an auxiliary battery slot 54 as a supplemental power source to the vehicle's battery if the entertainment module 10 is being operated with docking station 50a when the vehicle in the keyed-off position. In an alternative embodiment, the battery slot 54 may be included in the entertainment module 10. Additionally, it will be appreciated that circuitry (not shown) located within the docking station 50a may be utilized to charge a battery inserted into the auxiliary battery slot 54 when the vehicle is in the keyed-on position. The docking station 50a may also include an IR receiver 56 connected to an interface box 58 that provides an output to a data-bus 60 for controlling other components in the vehicle, such as, for example, the radio, which may be located in a head unit proximate the dashboard (not shown). Conversely, it is contemplated that the interface box 58 may permit vehicle passengers in the front seat of the vehicle to control the entertainment module 10 in the back seat by pressing control buttons located proximate the dashboard.

The docking station 50a also includes an optional wireless module 62. The wireless module 62 may be, for example, a "Wireless-X" module, such as, a Wireless-B (i.e. 802.11b), Wireless-G (i.e. 802.11g), Wireless-N (i.e. 802.11n), or any other desirable Wireless-"X" (i.e. 802.11"X") technology. Alternatively, the wireless module 62 may include BLUETOOTH®, Ultra-wideband (UWB), or a similar technology. As illustrated, the wireless module 62 is connected to an optional storage means, such as a hard drive device (HDD) 64. The wireless module 62 may receive, for example, wirelessly downloaded audio and/or video content from an antenna 66 for playback over the speakers 25 and/or the display screen 12.

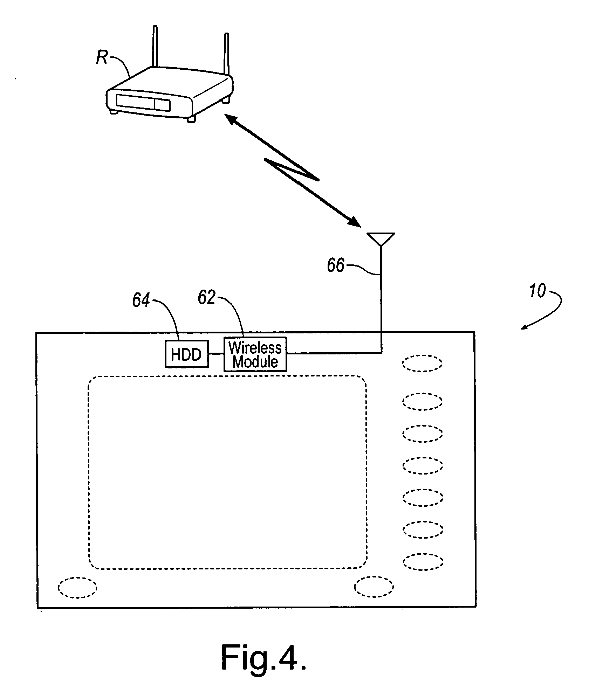

As shown in Figure 4 in an alternative embodiment, the entertainment module 10 may include the antenna 66, wireless module 62 and the HDD 64. As such, it will be appreciated that the docking station 50a, may, if desired, be merely utilized as a structural element to support/retain the entertainment module 10 while also providing power to the entertainment module 10 (i.e., the docking station 50a may be designed to not include the wireless module 62 and HDD 64). Alternatively, the entertainment module 10 may include its own power source so as to further reduce a wiring/circuitry interface (e.g. the connector 22) between the docking station 50 and entertainment module 10. Although the wireless module 62 and HDD 64 are shown connected to each other while being located in the same device, it will be appreciated that the wireless module 62 may be located in the docking station 50a while the HDD 64 is located in the entertainment module 10, and vice-versa.

The source for providing the wireless download of information to the antenna 66 may be, according to an embodiment, a wireless router, R, that is commercially available, for example, from LINKSYS® of San Jose, California and sold as model number WAP54G. Accordingly, it is contemplated that when the vehicle is located in the homeowner's garage or driveway within a broadcast radius of the wireless router, R, the antenna 66 connected to the wireless module 62, which may be part of the docking station 50a or entertainment module 10, may receive the downloaded programming. Alternatively, the entertainment module 10 may be located within the home and in the broadcast radius of the wireless router, R, to directly download the programming to the entertainment module 10. In another embodiment, the docking station 50a or entertainment module 10 may receive the downloaded content from a "wireless hot spot" proximate a restaurant, coffee house, or the like that provides free wireless internet access; accordingly, the user may park the vehicle including the docking station 50a nearby the restaurant, coffee house, or the like to receiving the wireless broadcast, or, alternatively, the user may bring the entertainment module 10 with the restaurant, coffee house, or the like. Upon receiving the downloaded audio and/or video content at the antenna 66, the downloaded content may be stored on the HDD 64 for subsequent playback on the display screen 12.

Referring to Figure 5, a docking station 50b and the entertainment module 10 are shown according to an embodiment. The entertainment module 10 and docking station 50b may be located, for example, in a home or office, and interfaces in a similar manner as the docking station 50a described above in that upon connecting the entertainment module 10 and docking station 50a, the entertainment module 10 may draw power from the home or office's 120V AC power and send/receive audio and/or video content to and from the entertainment module 10 and docking station 50b. If desired, the docking station 50b may also include a slot 54 for recharging an external battery that is used, for example, in the docking station 50a or entertainment module 10.

As described above in relation to the docking station 50a, the docking station 50b may also include an optional wireless module 62 connected to an optional hard drive device (HDD) 64 to wirelessly access and download audio and/or video content. Additionally, the docking station 50b or entertainment module 10 may be connected to an external device 150, such as, for example, a personal computer, modem, or set-top box. The external device 150 may be for example, a set-top box 150, as shown in Figure 5. As is known in the art, the set-top box 150 may provide cable or satellite television programming to a television 175. If implemented as shown in Figure 5, the entertainment module 10 and set-top box 150 may be connected with any desirable input/output connection, such as, for example, an S-video cable 152, an audio cable 154, a 1394/USB cable 156, or the like; however, if the entertainment module 10 directly receives the cable or satellite programming (i.e. there is no intermediate connection of the docking station 50b) it will be appreciated that the connections 152-156 may directly connect the external device 150 and entertainment module 10.

Programming content received by the set-top box 150 may be stored in the HDD 64 of the docking station 50b or entertainment module 10. If desired, the downloaded programming may be obtained by the docking station 50b or entertainment module 10 directly from a coaxial connection that is fed into the set-top box 150 or entertainment module 10; however, a wireless router, R, as described above, may wirelessly transmit the programming content to the docking station 50b or entertainment module 10. Thus, the entertainment module 10 may be used as a home theatre DVD player, or, alternatively, the docking station 50b or entertainment module 10 may be used as a digital video recorder (DVR) in a home theater system to play saved programming originating from the set-top box 150 or cable provider (i.e. directly from a coaxial cable from "basic cable" service that does not utilize a cable box). Although not shown in Figure 5, it will be appreciated that the docking station 50b and entertainment module 10 may be connected to a device other than a set-top box 150; for example, the docking station 50b and entertainment module 10 may be connected to, for example, a receiver/amplifier to amplifier and output sound over home theater speakers while a video cable may directly connect the television 175 and docking station 50b or entertainment module 10 to provide the video content on the television 175.

Accordingly, the fixed/portable audio and/or video system described above may permit a consumer to save money by purchasing a single entertainment module 10, which may be used in any desirable fixed or portable environment. If the consumer chooses to utilize the entertainment module 10 in a home and vehicular application, the consumer may elect to purchase no or any desirable number of docking stations 50a, 50b for home or mobile use. Even further, the entertainment module 10 or docking station may include an antenna 66, wireless module 62, and HDD 64 that permits the user to download and store programming content that is not part of their DVD library.

While the invention has been specifically described in connection with certain specific embodiments thereof, it is to be understood that this is by way of illustration and not of limitation, and the scope of the appended claims should be construed as broadly as the prior art will permit.

## Claims

1. An audio and/or video system, comprising:
a compact / digital-video disc player (10) adapted for connection to a docking station (50), wherein the compact / digital-video disc player (10) includes output means (12, 25) for providing programming that is audible and/or visible, wherein the compact / digital-video disc player (10) is not a general purpose computer.

2. The audio and/or video system according to Claim 1, wherein the compact / digital video disc player includes a storage means (64), an antenna (66), and an 802.11X wireless communication module (62) that interfaces with a wireless router (R), wherein the storage means (64) stores wirelessly accessed programming from an antenna of the 802.11X wireless module (62) to be provided by the output means (12, 25).

3. The audio and/or video system according to Claim 2, wherein the docking station (50) includes the storage means(64), antenna (66), and 802.11X wireless module (62).

4. The audio and/or video system according to Claim 2, wherein the compact / digital video disc player (10) includes the storage means (64), antenna (66), and 802.11X wireless module (62).

5. The audio and/or video system according to Claim 1, wherein the docking station (50) is located in a vehicle.

6. The audio and/or video system according to Claim 5, wherein the docking station (50a) is proximate a vehicle headliner (100).

7. The audio and/or video system according to Claim 1, wherein the docking station (50b) is located within a home.

8. The audio and/or video system according to Claim 7, wherein the docking station (50b) is adapted to be connected to a set-top box, modem, audio receiver, or general purpose computer (150).

9. The audio and/or video system according to Claim 1, wherein the programming is information stored on a compact disc or digital video disc (CD, DVD), wherein the compact disc or digital video disc (CD, DVD) is inserted into an input means (20).

10. The audio and/or video system according to Claim 9, wherein the input means (20) is a slot for receiving the compact disc or digital video disc (CD, DVD).

11. The audio and/or video system according to Claim 1, wherein the input means (20) receives MP3 audio files.

12. The audio and/or video system according to Claim 1, wherein the output means (12, 25) include a display screen and speakers.

13. The audio and/or video system according to Claim 2, wherein the storage means (64) is a hard disk drive.

14. The audio and/or video system according to Claim 1, wherein the docking station (50) further comprises a battery slot (54) for receiving a battery to provide a back-up power supply for operating the audio and/or video system.

15. An entertainment module (10) comprising an antenna (66) connected to a wireless module (62) that wirelessly accesses audio and/or video programming, a storage means (64) for storing the wirelessly accessed audio and/or video programming, and an input means (20) for receiving a compact disc or digital video disc (CD, DVD) that stores audio and/or video programming, and an output means (12, 25) for provding the wireless and stored audio and/or video programming, wherein the compact / digital-video disc player is not a general purpose computer.

16. The entertainment module (10) according to Claim 15,wherein the output means (12, 25) include a display screen and speakers.

17. The entertainment module (10) according to Claim 15, wherein the storage means (64) is a hard disk drive.

18. The entertainment module (10) according to Claim 15, wherein the wireless module (62) is a 802.11X wireless communication module that interfaces with a wireless router (R).
